Europäisches Patentamt

(19) European Patent Office  (11) Publication number: **0 022 369**

Office européen des brevets  **B1**

(12) **EUROPEAN PATENT SPECIFICATION**

(45) Date of publication of patent specification: **30.05.84**  (51) Int. Cl.³: **G 01 N 27/12**

(21) Application number: **80302298.7**

(22) Date of filing: **04.07.80**

(54) Combustible gas detecting elements.

(30) Priority: **06.07.79 JP 86173/79**
**06.07.79 JP 86174/79**

(43) Date of publication of application:
**14.01.81 Bulletin 81/02**

(45) Publication of the grant of the patent:
**30.05.84 Bulletin 84/22**

(84) Designated Contracting States:
**DE FR GB NL**

(56) References cited:
**FR-A-2 087 004**
**FR-A-2 106 112**
**FR-A-2 287 697**
**FR-A-2 331 015**
**FR-A-2 331 016**
**FR-A-2 417 765**
**GB-A-1 493 740**
**US-A-3 671 913**

**ELEKTRONIK, vol. 21, no. 5, May 1972,**
**München, DE, H.P. SIEBERT "Ein neuartiges**
**Halbleiter-Gas Detektor", pages 155-156**

(73) Proprietor: **Matsushita Electric Industrial Co.,**
**Ltd.**
**1006, Oaza Kadoma**
**Kadoma-shi Osaka-fu, 571 (JP)**

(72) Inventor: **Nakatani, Yoshihiko**
**158 Shinpoin-cho**
**Tennoji-ku, Osaka-shi, Osaka-fu (JP)**
Inventor: **Sakai, Masayuki**
**3-9-303, Myokenzaka**
**Katano-shi, Osaka-fu (JP)**
Inventor: **Nakatani, Seiichi**
**24-1-502, Miiminami-machi**
**Neyagawa-shi, Osaka-fu (JP)**
Inventor: **Matsuoka, Michio**
**A-601, 1-6, Sawaraginishi**
**Ibaraki-shi, Osaka-fu (JP)**

(74) Representative: **Spencer, Graham Easdale et al**
**A.A. Thornton & CO Northumberland House**
**303-306, High Holborn**
**London WC1V 7LE (GB)**

## Description

The present invention is concerned with combustible gas detecting elements for use, for example, as gas leak detectors.

Various metal oxide semiconductors have been proposed for use as combustible gas elements, such elements undergoing a change in resistivity in the presence of a combustible (or reducing) gas, such as methane (which is the principal component of natural gas).

Previously proposed gas detecting elements for detecting methane suffer from poisoning by various gases, have low selectivity for methane and are highly humidity-dependent, which is, of course, unsatisfactory because it is often desirable to use combustible gas detecting elements in humid atmospheres, such as kitchens and bathrooms.

French Specifications 2287697 and 2331016 disclose that gamma-ferric oxide ($\gamma$-$Fe_2O_3$), which has a spinel-type crystal structure, has excellent gas detection characteristics, unlike ferric oxide having other crystal forms, such as alpha ferric oxide ($\alpha$-$Fe_2O_3$), which has a corundum-type crystal structure, $\beta$-$Fe_2O_3$ and $\delta$-$Fe_2O_3$.

The sensitivity of a gas detecting element is usually defined as the ratio of Ra (its resistance in air) to Rg (its resistance in the gas to be detected). Commercial $\alpha$-$Fe_2O_3$ has a very low sensitivity, not only to methane, but also to ethane, propane and iso-butane.

French Specification 2331015 discloses one way of enhancing the sensitivity of certain metal oxide semiconductor type gas detecting elements as e.g. ferric oxide elements by adding metal catalysts (especially noble metal catalysts) thereto. This is disadvantageous in view of the cost of such catalysts. This specification also teaches to control the dimensions of the particles used in forming the sensor element. Moreover, the sensor elements according to this specification have been used to measure methane.

We have now developed an improved combustible gas detecting element, particularly for detecting methane, which does not require the use of a noble metal catalyst, and which is based on a material previously considered to be unsuitable.

Although $\alpha$-$Fe_2O_3$ has been thought to have poor gas response characteristics, we have found that $\alpha$-$Fe_2O_3$ of controlled microstructure has satisfactory sensitivity to methane of which microdetection has previously been considered to be difficult.

According to the invention, there is provided a combustible gas detecting element, which comprises ferric oxide in the form of a sintered film or body having electrodes applied thereto, characterised in that the ferric oxide is in the alpha crystal form and has an average grain size of less than 0.5 microns and a porosity of 35 to 85% such that the element has suitable gas detection characteristics for the practical detection of methane.

The gas response characteristics of the element according to the invention are less dependent on the ambient humidity than they are for prior elements. Furthermore, the gas detecting elements according to the invention have advantageously low sensitivity to alcohol (the latter could cause false alarms in use).

The present invention will be described in more detail hereinafter with reference to the accompanying drawings, in which:

Figure 1 is a perspective view of a gas detecting element according to the invention, which is in the form of a sintered body;

Figure 2 is a perspective view of a gas detecting element according to the invention, which is in the form of a sintered film;

Figure 3 is a graph showing the variation of grain size and porosity with sintering temperature for certain ferric oxide materials; and

Figure 4 is a graph showing the variation of electrical resistance with sintering temperature for certain ferric oxide materials.

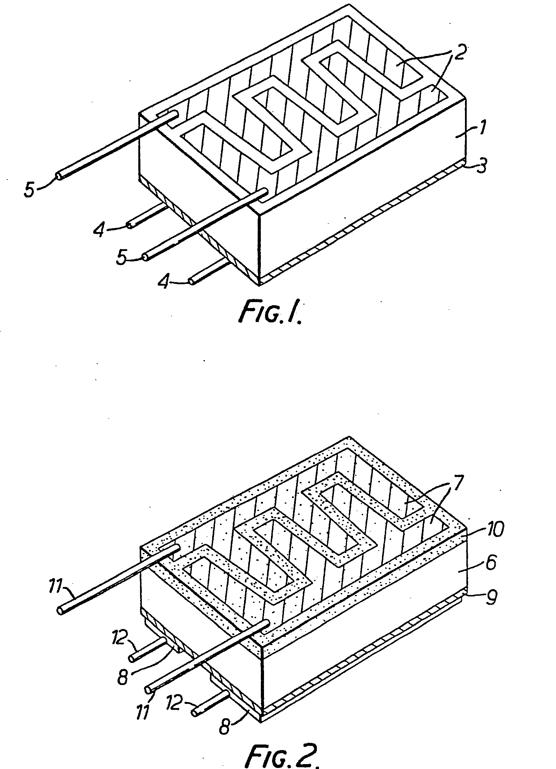

Referring to Figure 1, there is shown a first example of a gas detecting element according to the invention. The gas detecting element shown comprises a sintered body 1 having a pair of comb electrodes 2 on one surface thereof and heater electrodes 3 on the other surface thereof. The electrodes 2 and 3 are provided with respective lead wires 5 and 4. The operation of a gas detecting element as just described will be explained in more detail in the following Example 1.

Referring to Figure 2, there is shown a second example of a gas detecting element according to the invention. The gas detecting element 10 in the form of a sintered film is on one surface of a thermally resistant substrate 6. A pair of comb-shaped electrodes 7 is provided on element 10, and the other surface of substrate 6 is coated with a heating element 9 having thereon a pair of electrodes 8. The electrodes 7 and 8 are provided with respective lead wires 11 and 12.

The operation of a gas detecting element as just described will be explained in more detail in the following Example 5.

In order that the invention may be more fully understood, the following Examples are given by way of illustration only.

Example 1

Commercially available ferrous sulphate ($FeSO_4 \cdot 7H_2O$) 100 g was dissolved in 2 litres of pure water at 50°C with stirring. 8N ammonium hydroxide ($NH_4OH$) was added dropwise to the thus prepared solution at a rate of 60 cc/min until the pH reached 7. After the addition of ammonium hydroxide, the solution was kept at 50°C for ten minutes and then cooled to room temperature. The resulting brownish back coprecipitates was filtered off with suction and dried at 110°C for 12 hours.

The resulting dried powder was treated with air at 400°C for 1 hour, whereby gamma-ferric oxide ($\gamma$-$Fe_2O_3$) containing alpha-ferric oxide ($\alpha$-$Fe_2O_3$) in the form of powder was produced. The powder was crushed for 2 hours and then granulated with an organic binder to obtain particles of size 100 to 200 micrometres. These particles were pressed at a pressure of 400 kg/cm² to form rectangular parallelepipeds measuring 2×1.5×3 mm. The samples were sintered in air at 750°C for one hour, causing transformation to $\alpha$-$Fe_2O_3$. The average grain size of the sintered $\alpha$-$Fe_2O_3$ particles was 0.20 micrometres and the porosity of the sintered $\alpha$-$Fe_2O_3$ was 63%.

The sintered parallelepiped bodies, hereinafter referred to as bodies 1, were used to form combustible gas detecting elements as shown in Figure 1. To the surface of each body 1 was applied a coating of gold, by evaporation, to form a pair of semicircular electrodes 2 on each body 1. Platinum heater electrodes 3 were bonded to each reverse side by inorganic adhesives. Lead wires 5, 4 were bonded to electrodes 2 and heater electrodes 3, respectively.

The gas response characteristics of the resulting detecting elements were evaluated by determining the electric resistance between the gold electrodes 2 by means of the lead wires 5 with an operating temperature of 400°C controlled by controlling the electric current delivered to the heater electrodes by lead wires 4.

The resistance ($R_a$) in air of each element was determined in a measurement vessel having a volume of 50 litres in which dry air was stirred slowly so as not to generate turbulency therein; the value of Ra was 665 kΩ.

The resistance ($R_g$) of each element in a gas was determined in the same measurement vessel through which the gas (of at least 99% purity) was passed at a volume ratio of 10 ppm/sec. Methane ($CH_4$), ethane ($C_2H_6$), propane ($C_3H_8$), iso-butane (i-$C_4H_{10}$), hydrogen ($H_2$) and ethanol ($C_2H_5OH$) were used as gases to be detected; $R_g$ was measured when the introduced gas reached concentrations of 0.05%, 0.2% and 1.0%. The dependence of $R_g$ upon the concentration of each gas is shown in Table 1. As shown in this table all the elements had a remarkably small sensitivity to ethanol while they have satisfactory sensitivity to methane, ethane, propane, iso-butane and hydrogen.

$R_g$ of gas detecting elements according to the present invention was determined for each gas at a concentration of 0.2%, in an ambient atmosphere of 40°C in the range of relative humidity from 35 to 95%. In Table 1, $\beta_H$ represents the ratio $R_g$ (0.2) at a relative humidity of 35% to $R_g$ (0.2) at a relative humidity of 95%, that is $R_g$ $(0.2)_{35\% RH}$:$R_g$ $(0.2)_{95\% RH}$, indicating the magnitude of the dependency of $R_g$ (0.2) upon ambient humidity. As clearly shown in Table 1, the variation of $R_g$ (0.2) with ambient humidity is small although some small variation is found depending upon the sort of gas to be tested. In comparison, $\beta_H$ of the conventional gas detecting element of semiconductor type in which noble metal catalysts are added is about 1.25 or more.

Example 2

Sintered parallelepiped bodies were prepared as in Example 1, with, in different runs, sintering at 100°C intervals from 550 to 1,150°C, sintering being for one hour. The gas response characteristics and the dependency of the microstructure upon the sintering temperature were determined.

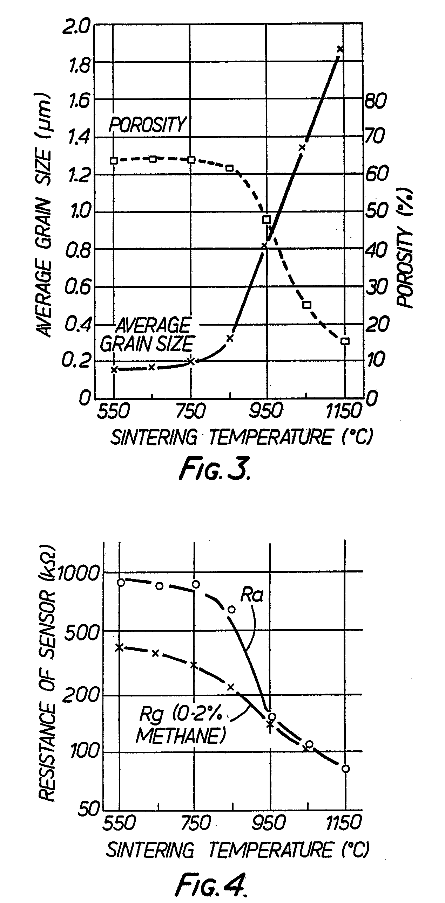

Figure 3 is a graph showing the relation between the sintering temperature, the average grain size and the porosity. Figure 4 is a graph showing the relation between the sintering temperature and gas response characteristics ($R_a$ and $R_g$ (0.2% methane)).

The graphs show that the growth of grains is promoted and also the porosity is reduced at a sintering temperature of 950°C or more, while the gas response characteristics vary with the grain size and the porosity. The gas response characteristics depend significantly upon the microstructure for a constant composition (thus, an average grain size of at least 0.5 micrometres results in a lower effective specific surface area activity and sensitivity to gas). If the porosity is less than 35% this leads to similar results as a grain size of more than 0.5 micrometres, while if the porosity is greater than 85%, the mechanical strength is too low.

The above results show that a gas detecting element according to the present invention has satisfactory sensitivity to methane even at a low operating temperature such as 400°C, without using noble metal catalysts, and has low sensitivity to alcohol, and varies little with humidity.

The sensitivity can be further enhanced by adding other components, as will be illustrated in the following Examples:

Example 3

Commercially available ferrous sulphate ($FeSO_4$ . $7H_2O$) 160 g was dissolved in 2 litres of pure water at 50°C with stirring. Also commercially available zinc sulphate ($ZnSO_4$ . $7H_2O$) 35 g was dissolved in one litre of pure water with stirring. The solution of zinc sulphate was poured into the ferrous sulphate solution and stirred. Then, 8N ammonium hydroxide ($NH_4OH$) solution was added dropwise at a rate of 60 cc/min until the pH of the solution reached 7. After addition of ammonium hydroxide, the solution was kept at 50°C for 10 minutes and then cooled to room temperature. The resulting coprecipitate was filtered with suction and dried at 110°C for 12 hours.

The resulting dried powder was subjected to oxidizing treatment as described in Example 1. The resulting element had an average grain size of 0.17 microns, a porosity of 64% and an $R_a$

value of 467 kΩ. The gas response characteristics were investigated as in Example 1; the results are shown in Table 2.

A comparison of Table 2 with Table 1 shows that the addition of zinc causes increased sensitivity to methane, ethane, propane and iso-butane and increased "resistance change ratio" (the change of resistance per unit concentration of gas) while the microstructure was not markedly different. The addition of zinc did not change the sensitivity to ethanol or the variation with ambient humidity greatly.

A similar effect was found when tin was added instead of zinc, or together with zinc. The following Example 4 shows the combined addition of zinc and tin.

Example 4

Aqueous solutions were prepared, as in Example 3, from commercially available ferrous sulphate $(FeSO_4 \cdot 7H_2O)$, stannic chloride $(SnCl_4 \cdot 5H_2O)$ and zinc sulphate $(ZnSO_4 \cdot 7H_2O)$, respectively and the solutions were mixed in various ratios. Coprecipitates were obtained by adding ammonium hydroxide $(NH_4OH)$ to the mixed solutions, followed by drying and crushing.

The resulting fine particulate materials were granulated with an organic binder to obtain grains of size 100 to 200 micrometres. A variety of such powders was pressed at a pressure of 400 kg/cm² to form rectangular parallelepiped bodies ($2 \times 1.5 \times 3$ mm), which were sintered in air at 800°C for 1 hour. Then gas detectors were fabricated by an evaporation coating of Au on the surface of each such sintered body 1 to form a pair of semicircular electrodes 2. A platinum heater electrode 3 was bonded to the reverse side by inorganic adhesives.

The gas response characteristics of the detectors were determined for methane, ethane, propane, iso-butane, hydrogen and ethyl alcohol at an operating temperature of 400°C, held constant by controlling the electric current passing through the heaters 3. The results are shown in Table 3, $R_g$ being the value at a gas concentration of 0.2%, and $\beta_H$ being the value for iso-butane which is the largest $\beta_H$ of all gases to be tested.

Table 3 shows that the addition of tin and zinc in a total ratio of <0.5 mole % (expressed as $SnO_2$ and $ZnO$) made little difference, while the addition thereof in an amount greater than 70 mole % leads to an extraordinary decrease of resistance, a scattered resistance and a large time-change in resistance. The total amount of Sn and Zn is therefore preferably in the range of 0.5 mole % to 70 mole % expressed as the oxides.

Such gas detecting elements according to the present invention enable high accuracy detection of methane, without using noble metal catalysts.

In the above Examples, the gas detecting element is in the term of a sintered body; the gas detecting element may be in other forms, such as a thick film, as illustrated in the following Example.

Example 5

Commercially available ferrous sulphate $(FeSO_4 \cdot 7H_2O)$ 160 g was dissolved in 2 litres of pure water at 50°C with stirring. Commercially available stannic chloride $(SnCl_4 \cdot 5H_2O)$ 80 g was also dissolved in one litre of pure water with stirring. The stannic chloride solution was poured into the ferrous sulphate solution with stirring. Then, 8N ammonium hydroxide $(NH_4OH)$ solution was added dropwise to the mixed yellow solution at a rate of 60 cc/min until the pH of the solution reached 7. After the addition of ammonium hydroxide the solution was kept at 50°C and then cooled to room temperature. The resulting brownish black coprecipitate was filtered off with suction and dried at 110°C for 12 hours. The resulting blackish grey fine particles were crushed for 2 hours and formed into grains of size 50 to 100 micrometres, and then made into a paste by adding polyethylene glycol.

Meanwhile (referring to Figure 2), a pair of semicircular electrodes 7 was formed by printing gold paste in semicircular shape at 0.5 mm intervals on the surface of an alumina substrate 6 measuring $5 \times 5 \times 0.5$ mm, which was then heat-treated. Commercially available paste of ruthenium oxide was printed between gold electrodes 8 on the reverse side of the alumina substrate and heat-treated to form glaze resistor heaters 9.

The above-mentioned polyethylene glycol paste was coated on the surface of the alumina substrate in a thickness of about 70 micrometres. After drying in air at room temperature, the coated substrate was fired at 650°C for 1 hour in air, whereby the volatiles present in the paste evaporated to obtain a sintered film 10 having satisfactory mechanical strength and a thickness of about 40 micrometres.

The gas response characteristics were determined at an operating temperature of 400°C maintained as in Example 1.

The resistance ($R_a$) in air, determined as in Example 1, was 860 kΩ, and the dependency of $R_g$ upon the concentration of the respective gas is shown in Table 4.

As shown in Table 4, the element had a remarkably small sensitivity to ethyl alcohol but a large sensitivity to methane, ethane, propane, iso-butane and hydrogen.

Thus, the gas detecting element according to the present invention has a large sensitivity not only to methane, ethane, hydrogen and iso-butane which are the components of liquified natural gas (LNG) and town gas but also to propane and iso-butane which are the principal components of LPG, even when in the form of a sintered film.

The $\beta_H$ values are similar to those of Tables 1 and 2.

Comparative example

Gas detecting elements were made from commercially available powdered oxides, as follows:

Special grade reagent ferric oxide, stannic oxide and zinc oxide in a ratio of $Fe_2O_3$ : $SnO_2$ : ZnO=80 mole % : 10 mole % : 10 mole : were blended together for 5 hours by means of a ball mill. Then the mixture was dried in air of 200°C for 20 hours, followed by granulating, pressing and sintering as in Example 4. The average grain size of $Fe_2O_3$, $SnO_2$ and ZnO used were about 2.5 microns, 8.6 microns and 4.5 microns, respectively.

The resulting material had a porosity of 46% and its $R_a$ value at the operating temperature of 400°C was 785 k$\Omega$ (which was little different from the value of 696 k$\Omega$ in Example 4). However, $R_g$ (0.2) for methane, ethane, propane, iso-butane and hydrogen was 656 k$\Omega$, 640 k$\Omega$, 630 k$\Omega$, 621 k$\Omega$ and 683 k$\Omega$, respec-

tively (the material has low sensitivity to each gas).

As is apparent from the foregoing, the combustible gas detecting element according to the present invention has a large sensitivity to a combustible gas such as methane which has previously been difficult to detect sensitively unless noble metal catalysts are used. Further, it is highly selective (it has lower sensitivity to alcohol which is believed to be the principal cause of the false alarms, and low variation with water vapour, which is another cause of false alarms).

Although $FeSO_4$ $7H_2O$, $ZnSO_4$ $7H_2O$ and $SnCl_4$ $5H_2O$ are used as the materials for preparing aqueous solutions in the Examples of the present invention, they need not be limited to those described above. Any materials forming any aqueous solution containing the respective metallic ion(s) may be used. Also metallic ions other than stannic ions and zinc ions may be present in the combustible gas detecting element, if desired.

TABLE 1

| Kind of gas | $R_g$ (k$\Omega$) | | | $\beta_H$ |
|---|---|---|---|---|
| | 0.05% | 0.2% | 1.0% | |
| Methane | 451 | 249 | 126 | 0.94 |
| Ethane | 406 | 220 | 108 | 0.99 |
| Propane | 381 | 204 | 97.6 | 1.02 |
| Isobutane | 364 | 194 | 93.2 | 1.04 |
| Hydrogen | 338 | 179 | 85.5 | 1.03 |
| Ethanol | 542 | 393 | 254 | 1.02 |

TABLE 2

| Kind of gas | $R_g$ (k$\Omega$) | | | $\beta_H$ |
|---|---|---|---|---|
| | 0.05% | 0.2% | 1.0% | |
| Methane | 191 | 82.5 | 33.3 | 0.94 |
| Ethane | 170 | 75.2 | 29.9 | 0.98 |
| Propane | 166 | 73.6 | 30.4 | 1.01 |
| Isobutane | 160 | 68.3 | 27.6 | 1.04 |
| Hydrogen | 141 | 64.2 | 24.6 | 1.03 |
| Ethanol | 360 | 229 | 130 | 1.02 |

TABLE 3

Operating temperature 400°C

| Mixing ratio (mol. %) | | | $R_g$ (0.2) | | | | | | (kΩ) | | Microstructure | | |
|---|---|---|---|---|---|---|---|---|---|---|---|---|---|
| $SnO_2$ | ZnO | Ra (kΩ) | Methane | Ethane | Propane | Isobutane | Hydrogen | ethyl-alcohol | $\beta_H$ (isobutane 0.2%) | Average grain size ($\mu$m) | Porosity (%) | |
| 0.1 | 0.1 | 648 | 503 | 465 | 443 | 431 | 391 | 635 | 1.02 | 0.20 | 63 | * |
| 0.5 | 0 | 640 | 406 | 371 | 354 | 338 | 329 | 590 | 1.03 | 0.21 | 66 | |
| 5.0 | 5.0 | 663 | 313 | 294 | 290 | 276 | 261 | 488 | 1.04 | 0.19 | 64 | |
| 10.0 | 10.0 | 696 | 246 | 213 | 186 | 170 | 159 | 399 | 1.06 | 0.18 | 63 | |
| 30.0 | 40.0 | 716 | 278 | 260 | 241 | 220 | 218 | 501 | 1.05 | 0.17 | 70 | |
| 70.0 | 0 | 5230 | 1060 | 803 | 768 | 744 | 709 | 3820 | 1.06 | 0.11 | 76 | |
| 0 | 70.0 | 260 | 42 | 38 | 36 | 32 | 29 | 176 | 1.06 | 0.15 | 69 | |
| 40.0 | 40.0 | 120 | 73 | 70 | 61 | 60 | 53 | 96 | 1.05 | 0.17 | 73 | * |
| 0 | 85 | 1260 | 1010 | 860 | 695 | 628 | 896 | 916 | 1.08 | 0.15 | 70 | * |
| 85 | 0 | Properties largely vary from sample to sample | | | | | | | | 0.12 | 72 | * |

Samples denoted with * are those for comparison.

TABLE 4

$R_a = 860$ k$\Omega$          Operating temperature 400°C

| Kind of gas | $R_g$ (k$\Omega$) | | | |
|---|---|---|---|---|
| | 0.05% | 0.2% | 1.0% | $\beta_H$ |
| Methane | 490 | 278 | 146 | 0.97 |
| Ethane | 458 | 259 | 133 | 1.02 |
| Propane | 446 | 240 | 120 | 1.05 |
| Isobutane | 418 | 227 | 114 | 1.06 |
| Hydrogen | 390 | 206 | 99 | 1.04 |
| Ethylalcohol | 780 | 540 | 322 | 1.03 |

## Claims

1. A combustible gas detecting element comprising ferric oxide in the form of a porous sintered film or body having electrodes applied thereto, characterized in that the ferric oxide is in the alpha crystal form and has an average grain size of less than 0.5 microns and a porosity of 35 to 85% such that the element has suitable gas detection characteristics for the practical detection of methane.

2. A combustible gas detecting element according to claim 1, characterized in that the element contains tin and/or zinc ions in an amount of 0.5 to 70 mole %, expressed as the total amount of stannic oxide ($SnO_2$) and zinc oxide (ZnO) relative to the total amount of oxides.

3. A method of manufacturing a combustible gas detecting element according to claim 1, characterized in that the ferric oxide is made by precipitating ferric ions from solution by means of a base, and heat treating the precipitate, followed by granulating, pressing and sintering.

4. A method of manufacturing a combustible gas detecting element according to claim 2, characterized in that the ferric oxide containing tin and/or zinc ions is made by precipitating ferric ions, together with tin and/or zinc ions, from a solution containing said ions by means of a base, and heat treating the precipitate, followed by granulating, pressing and sintering.

## Patentansprüche

1. Detektorelement für brennbare Gase, enthaltend Eisen(III)-oxid in der Form eines porösen gesinterten Films oder Körpers an den Elektroden angelegt sind, dadurch gekennzeichnet, daß das Eisen(III)-oxid in der $\alpha$-Kristallform vorliegt und eine durchschnittliche Korngröße von weniger als 0,5 Mikron und eine Porosität von 35 bis 85% aufweist, derart, daß das Element geeignete Gas-Feststellungscharakteristika für die praktische Feststellung von Methan aufweist.

2. Detektorelement für brennbare Gase nach Anspruch 1, dadurch gekennzeichnet, daß das Element Zinn- und/oder Zinkionen in einer Menge von 0,5 bis 70 Mol-%, ausgedrückt als Gesamtmenge von Zinn(IV)-oxid ($SnO_2$) und Zinkoxid (ZnO), bezogen auf die Gesamtmenge der Oxide, enthält.

3. Verfahren zur Herstellung eines Detektorelements für brennbare Gase nach Anspruch 1, dadurch gekennzeichnet, daß das Eisen(III)-oxid hergestellt wird durch Ausfällen von Eisen(III)-ionen aus Lösung mittels einer Base und Wärmebehandlung der Ausfällung, gefolgt vom Granulieren, Pressen und Sintern.

4. Verfahren zur Herstellung eines Detektorelements für brennbare Gase nach Anspruch 2, dadurch gekennzeichnet, daß das Zinn- und/oder Zinkionen enthaltende Eisen(III)-oxid hergestellt wird durch Ausfällen von Eisen(III)-ionen zusammen mit Zinn- und/oder Zinkionen, aus einer Lösung, die diese Ionen enthält, mittels einer Base und Wärmebehandlung der Ausfällung, gefolgt vom Granulieren, Pressen und Sintern.

## Revendications

1. Un élément détecteur de gaz combustible consistant en oxyde ferrique sous la forme d'un film ou corps fritté poreux sur lequel sont appliquées des électrodes, caractérisé en ce que l'oxyde ferrique est sous la forme cristalline alpha et a une dimension moyenne de grain de moins de 0,5 micron et une porosité de 35 à 85%, de sorte que l'élément possède des caractéristiques appropriées de détection des gaz pour la détection pratique du méthane.

2. Un élément détecteur de gaz combustible selon la revendication 1, caractérisé en ce que l'élément contient des ions étain et/ou zinc en quantité de 0,5 à 70 moles %, exprimée par la quantité totale d'oxyde stannique ($SnO_2$) et d'oxyde de zinc (ZnO) par rapport à la quantité totale d'oxydes.

3. Un procédé pour fabriquer un élément détecteur de gaz combustible selon la revendication 1, caractérisé en ce que l'oxyde ferrique est fabriqué par précipitation d'ions ferriques d'une solution au moyen d'une base et traitement thermique du précipité suivi de granulation, pressage et frittage.

4. Un procédé de fabrication d'un élément détecteur de gaz combustible selon la revendication 2, caractérisé en ce que l'oxyde ferrique contenant des ions étain et/ou zinc est fabriqué par précipitation d'ions ferriques conjointement avec des ions étain et/ou zinc d'une solution contenant lesdits ions au moyen d'une base, et traitement thermique du précipité suivi de granulation, pressage et frittage.

FIG. 1.

FIG. 2.

FIG. 3.

FIG. 4.